Europäisches Patentamt

European Patent Office

Office européen des brevets

(19)

(11) Numéro de publication: 0 340 091
A1

## (12) DEMANDE DE BREVET EUROPEEN

(21) Numéro de dépôt: 89401154.3

(22) Date de dépôt: 24.04.89

(51) Int. Cl.4: G 02 C 7/02

(30) Priorité: 25.04.88 FR 8805436

(43) Date de publication de la demande:
02.11.89 Bulletin 89/44

(84) Etats contractants désignés:
CH DE ES GB IT LI NL

(71) Demandeur: ESSILOR INTERNATIONAL Cie Générale
d'Optique
1 Rue Thomas Edison Echat 902
F-94028 Creteil Cédex (FR)

(72) Inventeur: Bonbon, Emmanuel
10 Rue Fondary
F-75015 Paris (FR)

Mercier, Jean-Louis
3 Rue de Bon Puits
F-91640 Fontenay les Briis (FR)

(74) Mandataire: CABINET BONNET-THIRION
95 Boulevard Beaumarchais
F-75003 Paris (FR)

(54) Lentille ophtalmique unifocale à gradient d'indice et de puissance géométrique nulle.

(57) Il s'agit d'une lentille ophtalmique unifocale à surfaces concave et convexe sphériques et variation d'indice.

Suivant l'invention, sa puissance optique ($P_O$) étant due à sa seule variation d'indice de réfraction, sa puissance géométrique ($P_G$) est nulle, cependant que les aberrations sont maintenues dans des limites convenables.

Application aux lentilles ophtalmiques correctrices.

FIG. 1

EP 0 340 091 A1

## Description

## Lentille ophtalmique unifocale à gradient d'indice et de puissance géométrique nulle

La présente invention concerne d'une manière générale les lentilles ophtalmiques unifocales, c'est-à-dire de puissance constante, qu'il s'agisse de lentilles convergentes, c'est-à-dire de puissance positive, ou qu'il s'agisse de lentilles divergentes, c'est-à-dire de puissance négative.

Elle vise plus particulièrement celles de ces lentilles dont l'une et l'autre des faces, c'est-à-dire tant la face avant convexe que la face arrière concave, sont sphériques.

Ces lentilles ont pour avantage d'être relativement aisées à usiner.

Mais deux problèmes, notamment, se présentent à leur sujet.

Le premier a trait au fait que, pour des puissances relativement élevées, leur épaisseur maximale, ou épaisseur critique, qui en est l'épaisseur au centre pour une puissance positive et l'épaisseur à la périphérie pour une puissance négative, est relativement élevée, au détriment de leur esthétique, et, par le poids qui en résulte, au détriment du confort de l'usager.

Le deuxième a trait au fait que, notamment pour ces puissances élevées, les aberrations, et en particulier les aberrations d'astigmatisme et les aberrations de courbure de champ, deviennent de plus en plus importantes au fur et à mesure que l'axe de vision de l'usager s'écarte de leur axe optique.

Pour minimiser ces aberrations, il est usuellement mis en oeuvre une surface asphérique pour l'une au moins des faces, au prix d'une complication de l'usinage de celle-ci.

Le plus souvent, par ailleurs, l'indice de réfraction du matériau constitutif des lentilles ophtalmiques est uniforme.

S'agissant de lentilles ophtalmiques à faces concave et convexe sphériques, la puissance se trouve alors géométriquement déterminée par cet indice de réfraction, le rayon de courbure des faces et l'épaisseur au centre.

Il a cependant déjà été proposé de faire varier radialement l'indice de réfraction de l'axe optique d'une lentille ophtalmigue vers sa périphérie.

C'est le cas, par exemple, dans le brevet anglais No 1.571.930, et c'est le cas, également, dans la demande de brevet français qui, déposée le 20 Mai 1987 sous le No 87 07084, a été publiée sous le No 2.599.157.

Dans l'un et l'autre cas, il est essentiellement recherché une correction des aberrations.

Plus précisément, dans le brevet anglais No 1.571.930, suivant lequel la variation d'indice de réfraction se fait quasi linéairement, il est de préférence fait en sorte que, grâce à cette variation d'indice de réfraction, les faces concave et convexe de la lentille concernée soient encore effectivement des faces sphériques.

Dans la demande de brevet français No 87 07084, suivant laquelle les faces concave et convexe ne sont pas nécessairement des faces sphériques, il est en principe recherché une minimisation de l'épaisseur critique de la lentille.

Mais, les exemples qui y sont explicités le montrent, l'indice de réfraction ne varie pas nécessairement de manière sensible dans la partie centrale de cette lentille, qui en est pourtant la partie la plus utilisée, et, surtout, la puissance optique de cette lentille ne s'écarte pas de manière sensible de sa puissance géométrique.

La présente invention est fondée sur le fait, jusqu'ici non encore mis en évidence, que, par une variation appropriée d'indice de réfraction, il est au contraire possible de modifier de manière substantielle la puissance optique d'une lentille par rapport à sa puissance géométrique, tout en procédant à une correction satisfaisante de son astigmatisme et de sa courbure de champ.

Elle vise la réalisation de lentilles ophtalmiques unifocales, qui, tout en présentant avantageusement des faces concave et convexe rigoureusement sphériques, et donc faciles à usiner, et tout en étant suffisamment corrigées de leurs aberrations d'astigmatisme et de courbure de champ, ont avantageusement une épaisseur constante, sans donc présenter une quelconque épaisseur supérieure à leur centre ou à leur périphérie.

De manière plus précise, elle a pour objet une lentille ophtalmique unifocale du genre comportant des faces concave et convexe sphériques et un indice de réfraction variable radialement de son axe optique vers sa périphérie, cette lentille ophtalmique étant d'une manière générale caractérisée en ce que, sa puissance optique étant due à sa seule variation d'indice, sa puissance géométrique est nulle.

En bref, la présente invention permet d'associer avantageusement la mise en oeuvre de faces concave et convexe sphériques, l'obtention d'une épaisseur constante et le maintien d'une bonne qualité d'image.

Les caractéristiques et avantages de l'invention ressortiront d'ailleurs de la description qui va suivre, à titre d'exemple, en reférence aux dessins schématiques annexés sur lesquels :

la figure 1 est une vue en coupe, sans hachure, d'une lentille ophtalmique unifocale suivant l'invention ;

la figure 2 est un diagramme se rapportant aux aberrations d'astigmatisme et de courbure de champ de cette lentille ;

les figures 3, 4 sont chacune respectivement analogues aux figures 1, 2, pour une autre lentille ophtalmique unifocale suivant l'invention.

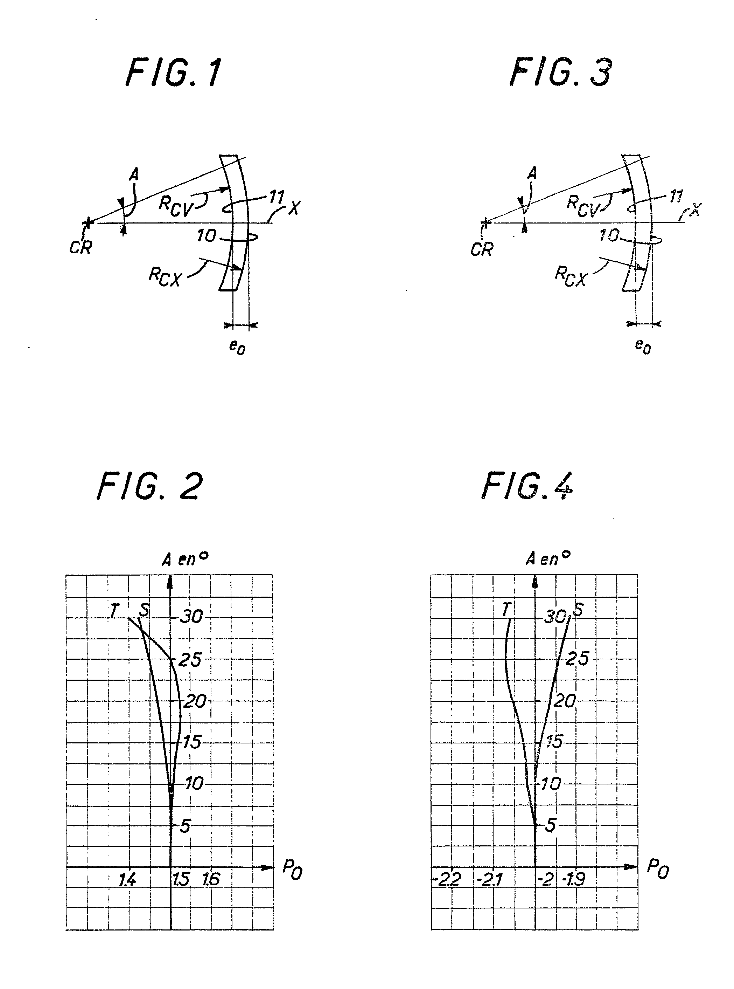

Les figures 1 et 2 illustrent l'application de l'invention à une lentille ophtalmique convergente, et donc de puissance positive.

Elle présente une face avant convexe 10 et une face arrière concave 11.

L'une et l'autre sont sphériques.

Soit $R_{CX}$ le rayon de la face convexe 10, et $R_{CV}$ celui de la face concave 11.

Soit $e_O$ l'épaisseur au centre, mesurée suivant l'axe optique X de l'ensemble.

Si l'indice de réfraction du matériau constitutif de la lentille concernée est uniforme et a pour valeur $n_O$, la puissance de cette lentille se trouve exclusivement déterminée par sa géométrie, en fonction, outre cet indice de réfraction $n_O$, des rayons $R_{CX}$ et $R_{CV}$ de ses faces convexe et concave, et de son épaisseur au centre $e_O$.

Soit $P_G$ cette puissance, dite ci-aprés puissance géométrique' qui répond en pratique à la formule suivante :

$$P_G = D_1 + D_2 - \frac{e_0}{n_0} \cdot D_1 \cdot D_2$$

$$\text{avec } D1 = \frac{n_0 - 1}{R_{CX}} \text{ et } D_2 = \frac{n_0 - 1}{R_{CV}}$$

De manière connue en soi, il est mis en oeuvre un indice de réfraction n variable radialement de l'axe optique X de la lentille vers sa périphérie.

Cet indice de réfraction n variant ainsi en fonction de la distance r à l'axe optique X, la puissance réelle de cette lentille, dite ci-aprés puissance optique $P_O$, se trouve alors différer légèrement de sa puissance géomérique $P_G$, l'indice de réfraction n entrant dans son calcul.

Suivant l'invention, la puissance optique $P_O$ de la lentille est due à sa seule variation d'indice de réfraction.

Sa puissance géométrique $P_G$ est donc nulle. Autrement dit :

$R_{CX} = R_{CV}$

ou, au moins

$R_{CX} \neq R_{CV}$

Ayant de ce fait même épaisseur en chacun de ses points, la lentille ophtalmique unifocale suivant l'invention est donc à faces parallèles.

En pratique, la loi de variation de son indice de réfraction n est choisie de manière à ce que, en chacun de ses points, cette loi de variation réponde à la relation suivante :

$$\frac{d \lfloor \text{grad } n \rfloor}{dr} \neq 0$$

dans laquelle, comme indiqué ci-dessus, r est la distance d'un tel point à l'axe optique X.

Cette relation implique que, en tout point de la lentille, y compris dans sa zone centrale, la variation de l'indice de réfraction n n'est pas linéaire, mais présente au contraire un certain gradient.

Ainsi, suivant une caractéristique de l'invention, c'est par un effet de gradient, et non par un effet de distribution, que la variation de l'indice de réfraction est mise à profit pour "créer" de la puissance optique.

Bien entendu, les aberrations, et, en particulier, celles d'astigmatisme et de courbure de champ, doivent, corollairement, être corrigées.

Mais, suivant l'invention, les corrections correspondantes sont limitées, le parti étant pris, non pas de les pousser à leur extrême, mais de faire en sorte qu'elles soient justes suffisantes pour que les aberrations restent dans les limites de tolérance usuellement jugées convenables, telles qu'elles existent pour les lentilles ophtalmiques conventionnelles de même type.

Ainsi, suivant l'invention, la variation de l'indice de réfraction n est choisie de manière à permettre l'obtention de la puissance recherchée plutôt que la correction des aberrations, pour pouvoir disposer de lentilles ophtalmiques unifocales, qui, tout en présentant des faces concave et convexe sphériques, et donc aisément usinables, sont avantageusement moins lourdes et plus esthétiques, puisque d'épaisseur constante, et qui sont cependant suffisamment corrigées des aberrations d'astigmatisme et de courbure de champ pour que celles-ci ne soient pas supérieures à celles usuellement jugées comme acceptables.

En pratique, il suffit, suivant l'invention, de se fixer les caractéristiques géométriques de la lentille recherchée, en l'espèce le rayon $R_{CX}$ ou $R_{CV}$ de ses faces convexe et concave, et son épaisseur, pour que l'homme de l'art sache choisir la loi de variation de l'indice de réfraction n qui, tout en permettant d'obtenir la puissance optique $P_O$ recherchée, conduise à une correction suffisante des aberrations d'astigmatisme et de courbure de champ.

Cette loi de variation de l'indice de réfraction n peut par exemple être exprimée de la manière suivante :

$$n = n_0 + \sum_{j = 1 \text{ à } 5} a_j \, r^{2j}$$

$n_O$ étant l'indice de réfraction sur l'axe optique X, $a_j$ des coefficients numériques, et, comme déjà indiqué ci-dessus, r la distance à l'axe optique.

On donnera ci-aprés, à titre non limitatif, les valeurs numériques relatives à un exemple possible de réalisation pour une lentille ophtalmique unifocale convergente.

## EXEMPLE 1

$R_{CX}$ = 160 mm

$R_{CV}$ = 159,333 mm

$e_O$ = 2 mm

$n_O$ = 1,5

Suivant l'invention, on met en oeuvre une variation d'indice de réfraction pour laquelle les coefficients a de la loi correspondante sont les suivants :

$a_1$ = - 0,3732.10$^{-3}$

$a_2$ = 0,3.10$^{-7}$

$a_3$ = 0

$a_4$ = 0,1.10$^{-12}$

$a_5$ = 0

Avec une telle loi de variation, l'indice de réfraction va en décroissant de l'axe X de la lentille à sa périphérie, et la puissance optique $P_O$ obtenue est la suivante :

$P_O$ = 1,5 dpt.

Corollairement, l'indice de réfraction n pour un point situé à une distance radiale de l'axe optique X égale à 15 mm, cette distance radiale correspondant en pratique à un angle de vision de l'ordre de 30° par rapport à cet axe optique est le suivant :

$n_{15mm}$ = 1,427

La différence n entre cet indice de réfraction n et l'indice de réfraction $n_O$ sur l'axe optique X est donc égale à - 0,073.

Elle est donc supérieure, en valeur absolue, à 0,07.

Les aberrations d'astigmatisme et de courbure de champ que présente par ailleurs la lentille ophtalmique convergente ainsi obtenue ressortent du diagramme de la figure 2.

Sur ce diagramme figurent, en abscisses, la puissance optique $P_O$, en dioptries, et, en ordonnées, l'angle de vision A par rapport à l'axe optique X, en degrés.

Ainsi qu'on le sait, cet angle de vision A est apprécié par rapport au centre de rotation CR de l'oeil, avec la lentille ophtalmique supposée être placée de manière à avoir sa face arrière concave 11 à une distance de ce centre de rotation CR sensiblement égale à 25 mm.

Sur le diagramme de la figure 2, la courbe S correspond à la focale sagittale, qui est celle contenue dans le plan de la figure 1, et la courbe T correspond à la focale tangentielle, qui est celle contenue dans le plan perpendiculaire au précédent.

Ainsi qu'on le sait, la différence T-S correspond à l'astigmastisme Ast, et l'expression [$^1/_2$ (T + S) - $P_O$] à la courbure de champ CC.

Il ressort du diagramme de la figure 2, qui a été volontairement limité à 30°, cet angle de vision correspondant normalement au balayage vertical maximal de l'oeil humain, que l'astigmatisme Ast reste inférieur à 0,04 dioptrie' en atteignant cette valeur pour 22° et que la courbure de champ CC reste inférieure, en valeur absolue, à 0,09 dioptrie, en atteignant cette valeur pour 30°.

Soit :

$Ast_{max}$ = 0,04 dpt à 22°

$CC_{max}$ = - 0,09 dpt à 30°

De telles valeurs d'aberration d'astigmatisme et de courbure de champ sont parfaitement acceptables.

En outre, la courbure de champ étant négative, elle peut aisément être compensée par accommodation.

Les figures 1 et 2 illustrent l'application de l'invention à la réalisation d'une lentille ophtalmique unifocale divergente, et donc de puissance négative.

On en donnera ci-après un exemple pratique de réalisation, dans les mêmes conditions que ci-dessus.

## EXEMPLE 2

$R_{CX}$ = 160 mm

$R_{CV}$ = 159,333 mm

$e_O$ = 2 mm

$n_O$ = 1,5

$a_1$ = 0,5.10$^{-3}$

$a_2$ = - 0,3.10$^{-7}$

$a_3$ = 0

$a_4$ = 0

$a_5$ = 0

d'où $P_O$ = - 2 dpt

$n_{15mm}$ = 1,597

$\Delta n$ = + 0,097

$Ast_{max}$ = - 0,14 dpt à 30°

$CC_{max}$ = 0,01 dpt à 15°

La figure 4 montre les courbes S et T pour cet exemple 2.

Pour la réalisation pratique de la loi de variation d'indice retenue, il est mis en oeuvre des techniques usuelles en ce domaine.

Ces techniques ne relevant pas de la présente invention, elles ne seront pas décrites ici.

Par exemple, appliquées à un barreau, elles conduisent à des surfaces d'iso-indice cylindriques, et le barreau ainsi traité est ensuite débité en palets propres à être usinés en lentilles ophtalmiques.

Bien entendu, l'invention n'est pas limitée aux exemples donnés, mais s'étend à toute variante d'exécution.

En outre, si, dans ce qui précède, il a été supposé, pour faciliter l'exposé, qu'une lentille unifocale suivant l'invention formait par elle-même une entité, il va de soi que, l'invention pouvant tout aussi bien s'appliquer aux lentilles multifocales, et par exemple aux lentille bifocales, elle pourrait participer à la constitution d'une telle lentille multifocale, en ne formant dès lors ainsi qu'une partie de celle-ci.

## Revendications

1. Lentille ophtalmique unifocale du genre comportant des faces concave et convexe sphériques et un indice de réfraction variable radialement de son axe optique vers sa périphérie, caractérisée en ce que, sa puissance optique ($P_O$) etant due à sa seule variation d'indice de réfraction, sa puissance géométrique ($P_G$) est nulle.

2. Lentille ophtalmique unifocale suivant la revendication 1, caractérisée en ce que, en chacun de ses points, la loi de variation de son indice de réfraction (n) répond à la relation suivante :

$$\frac{d\,[\,grad\ n\,]}{dr} = 0$$

r étant la distance de ce point à l'axe optique (X).

3. Lentille ophtalmique unifocale suivant l'une quelconque des revendications 1, 2, caractérisée en ce que, en chacun de ses points, la loi de variation de son indice de réfraction (n) peut être exprimée de la manière suivante :

$$n = n_0 + \sum_{j=1\ \text{à}\ 5} a_j\ r^{2j}$$

$n_0$ étant l'indice de réfraction sur l'axe optique (X)
$a_j$ des coefficients numériques
et r la distance à l'axe optique (X).

4. Lentille ophtalmique unifocale suivant l'une quelconque des revendications 1 à 3, caractérisée en ce que la différence d'indice de réfraction ($\Delta n$) entre son axe optique (X) et un point situé à une distance radiale de celui-ci égale à 15 mm est, en valeur absolue, supérieure à 0,07.

# FIG.1

# FIG.3

# FIG. 2

# FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | DE-A-2 707 601  (AMERICAN OPTICAL CORP.) <br> * Revendications * <br> --- | 1 | G 02 C   7/02 |
| D,A | GB-A-2 191 017  (OPTISCHE WERKE G. RODENSTOCK) <br> * Page 1; page 2, lignes 1-27 * <br> --- | 1 | |
| A | EP-A-0 101 972  (C. ZEISS) <br> * Pages 1-5 * <br> --- | 1 | |
| A | GB-A-2 034 498  (ESSILOR INTERNATIONAL) <br> * Page 1 * <br> ----- | 1 | |

DOMAINES TECHNIQUES
RECHERCHES (Int. Cl.4)

G 02 C   7/02

Le présent rapport a été établi pour toutes les revendications

| Lieu de la recherche | Date d'achèvement de la recherche | Examinateur |
|---|---|---|
| LA HAYE | 17-07-1989 | CALLEWAERT-HAEZEBROUCK H |

CATEGORIE DES DOCUMENTS CITES

X : particulièrement pertinent à lui seul
Y : particulièrement pertinent en combinaison avec un
 autre document de la même catégorie
A : arrière-plan technologique
O : divulgation non-écrite
P : document intercalaire

T : théorie ou principe à la base de l'invention
E : document de brevet antérieur, mais publié à la
 date de dépôt ou après cette date
D : cité dans la demande
L : cité pour d'autres raisons
..........................................................................................................
& : membre de la même famille, document correspondant

EPO FORM 1503 03.82 (P0402)